# FASCICULE DE BREVET EUROPEEN

(11) **EP 2 458 813 B1**
(45) Date de publication et mention de la délivrance du brevet: **02.01.2019**
(21) Numéro de dépôt: 11188168.6
(22) Date de dépôt: 08.11.2011
(51) Int. Cl.: H04L 29/14, H04L 29/12, H04L 29/06

(54) **Procédé de détection d'une situation de nomadisme d'un terminal SIP et terminal mettant en oeuvre ce procédé**
Verfahren zur Erkennung von Nomadentum eines SIP-Endgeräts und Endgerät, das dieses Verfahren umsetzt
Method for detecting a roaming status of an SIP terminal and terminal implementing said method

(30) Priorité: 30.11.2010 FR 1059901
(43) Date de publication de la demande: 30.05.2012
(73) Titulaire: Orange, 75015 Paris (FR)
(72) Inventeur: Bouvet, Bertrand, 22700 Perros-Guirec (FR); Trovel, Nelly, 22560 Trebeurden (FR)
(74) Mandataire: Delumeau, François Guy

(56) Documents cités:
- US-A1- 2009 285 175
- US-B1- 7 184 418
- ROSENBERG ET AL: "RFC 3261: SIP: Session Initiation Protocol", IETF REQUEST FOR COMMENTS, XX, XX, 1 juin 2002 (2002-06-01), pages 1-269, XP002323877,

## Description

### Arrière-plan de l'invention

L'invention se situe dans le domaine des réseaux de télécommunication de type IMS (IP Multimedia Subsystem) tel que défini par le 3GPP (Third Generation Partnership Project).

L'un des objectifs de l'IMS est de permettre à un utilisateur d'accéder à différents services quel que soit son type de connectivité IP.

Les réseaux IMS, initialement conçus pour les réseaux mobiles, tendent à se développer sur des réseaux d'accès fixes de type ADSL (Asymmetric Digital Subscriber Line), ou FTTH (Fiber To The Home), ou sur des réseaux câblés notamment.

Les architectures IMS pour les réseaux fixes ont en particulier été déployées pour la commercialisation d'offres dites « Multiplay » permettant à un utilisateur d'accéder à différents services du réseau IMS, et notamment à des services d'accès au réseau Internet, de voix sur IP (VoIP) et de télévision sur internet (IPTV), via une passerelle domestique.

Afin de diversifier leur offre, les opérateurs de télécommunication proposent des terminaux complémentaires aux téléphones fixes, ces terminaux complémentaires étant équipés d'un logiciel de voix sur IP (VoIP) utilisant le même identifiant public IMPU que celui de la passerelle domestique et un identifiant privé IMPI pouvant être ou non le même que celui de la passerelle domestique.

Pour s'enregistrer en coeur de réseau IMS, un terminal (appelé User Agent dans le document RFC3261) envoie, à un serveur S-CSCF (Serving Call State Control Function) responsable des enregistrements, une requête d'enregistrement comportant notamment les deux identifiants IMPU et IMPI précités. L'état de la technique est décrit par example dans les documents US 2009/285175 A1 et US 7 184 418 B1.

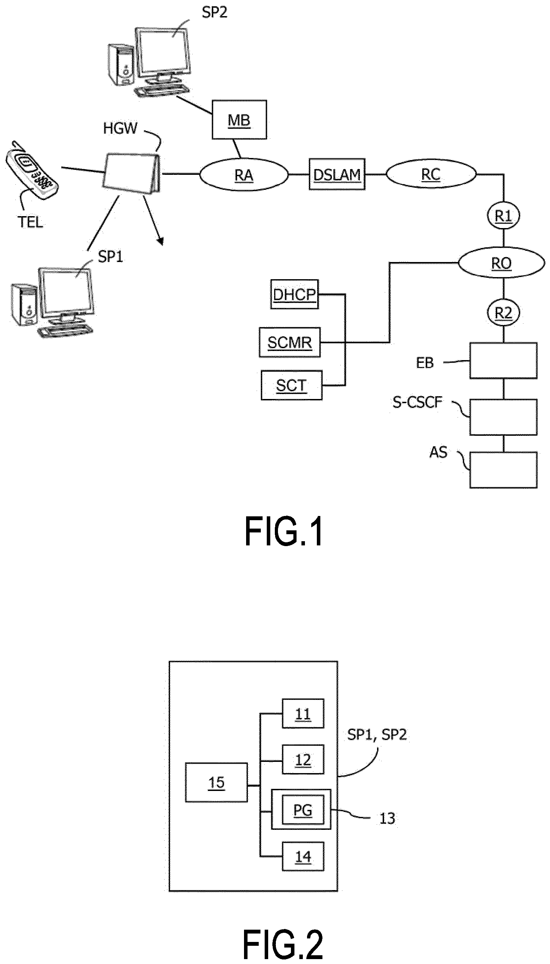

La **figure 1** illustre un réseau dans lequel l'invention peut être utilisée.

Sur cette figure, on a représenté une passerelle domestique HGW offrant un service de voix sur IP à partir d'un téléphone domestique TEL, constitué dans cet exemple par un téléphone conforme à la norme DECT.

La passerelle domestique HGW se connecte via un réseau d'accès RA, par exemple de type ADSL, au travers d'un premier équipement réseau de type DSLAM, celui-ci étant lui-même connecté à un réseau de collecte RC, par exemple de type ATM ou Giga Ethernet ce qui lui permet d'atteindre un réseau opérateur RO à travers un premier routeur R1.

Le réseau opérateur RO, de type backbone IP permet d'atteindre, au travers un deuxième routeur R2, le point d'entrée du réseau IMS.

De façon connue, le point d'entrée d'un réseau IMS est une entité dite « de bordure », référencée EB sur la figure 1, celle-ci pouvant être constituée par :
- un équipement SBC (Session Border Controller) ;
- un serveur P-CSCF ;
- un équipement remplissant à la fois les fonctions d'un équipement SBC et celles d'un serveur P-CSCF.

Le réseau IMS comporte notamment les entités fonctionnelles P-CSCF, I-CSCF, S-CSCF, SLF, HSS, et DNS ENUM connues de l'homme du métier.

Dans l'exemple décrit ici le réseau IMS est interconnecté à un serveur d'application AS auprès duquel les terminaux SIP enregistrés en coeur de réseau IMS peuvent souscrire pour accéder à un service.

Dans l'exemple de la figure 1, un premier terminal mobile secondaire SIP de voix sur IP (softphone VoIP) SP1 est connecté à la passerelle domestique HGW par une liaison sans fil WiFi et utilise la même identité publique IMPU que la passerelle HGW.

La passerelle HGW se comporte en modem routeur pour le terminal SIP SP1.

Lorsqu'on démarre la passerelle domestique HGW, celle-ci interroge un serveur de configuration VoIP pour modem routeur, référencé SCMR sur la figure 1, pour obtenir et télécharger son fichier de configuration VoIP, ce fichier comportant notamment ses paramètres d'abonnement aux services VoIP et en particulier son entité publique IMPU.

La passerelle HGW sauvegarde ce fichier dans sa mémoire non volatile.

Lorsque la passerelle HGW redémarre après avoir été éteinte, elle interroge à nouveau le serveur de fichier de configuration SCMR pour obtenir un indicateur de la dernière version du fichier de configuration ; elle télécharge le fichier de configuration uniquement si une nouvelle version est disponible.

Si pour une raison quelconque, par exemple en cas de maintenance du serveur SCMR, la passerelle domestique HGW n'est pas en mesure d'obtenir la nouvelle version du fichier de configuration, elle peut utiliser le fichier de configuration déjà mémorisé dans sa mémoire non volatile.

Lorsqu'on démarre le terminal de voix sur IP SP1, celui-ci étant connecté à la passerelle HGW (modem routeur) par une liaison WiFi, il obtient une adresse IP privée en interrogeant un serveur DHCP embarqué dans la passerelle HGW.

Il peut ensuite faire une requête GET HTTP vers un serveur de fichier de configuration terminal SCT, dont l'adresse URL est mémorisée dans sa mémoire non volatile, pour obtenir son fichier de configuration VoIP.

Il est fondamental de noter que dans le cas d'un terminal complémentaire SIP de voix sur IP SP1, ce fichier de configuration VoIP n'est pas enregistré dans une mémoire non volatile, mais dans une mémoire volatile, ceci pour des raisons de sécurité.

Par conséquent, lorsque le terminal SP1 n'est plus alimenté, il perd son fichier de configuration de voix sur IP, et doit l'obtenir à nouveau au prochain démarrage.

Sur la figure 1, on a également représenté un modem-pont (en anglais « modem bridge ») MB, par exemple un modem ADSL USB derrière lequel est connecté, via une interface USB, un deuxième terminal complémentaire de voix sur IP SP2 qui utilise la même identité publique IMPU que la passerelle HGW. Pour les raisons invoquées précédemment, lorsque le terminal complémentaire SP2 télécharge son fichier de configuration VoIP auprès du serveur SCT, il le mémorise dans sa mémoire volatile.

De façon connue, les opérateurs des réseaux de communication effectuent un certain nombre de contrôles avant d'autoriser un terminal SIP complémentaire SP1, SP2 à télécharger son fichier de configuration VoIP à partir du serveur SCT.

Ces contrôles peuvent notamment consister à vérifier que l'utilisateur du terminal SP1, SP2 est autorisé à accéder à un service de voix sur IP avec un terminal SIP complémentaire, ou que le nombre limite de terminaux SIP de même identité publique IMPU pouvant être enregistrés simultanément en coeur de réseau IMS n'est pas encore atteint, ou que le terminal SP1, SP2 est utilisé depuis une localisation spécifique. Dans le cas où les contrôles sont positifs, le fichier de configuration VoIP est fourni au terminal SP1, SP2, sinon un code d'erreur lui est retourné.

Lorsqu'un terminal complémentaire de voix sur IP SP1 connecté derrière la passerelle domestique HGW émet par exemple une requête GET HTTP pour obtenir son fichier de configuration VoIP, le serveur de fichier de configuration terminal SCT obtient l'adresse IP publique de cette passerelle qui transporte ce paquet HTTP.

Il est en effet connu qu'un modem routeur HGW met en oeuvre une fonction de traduction d'adresses (binding NAT) pour associer l'adresse IP privée du terminal SP1 avec l'adresse IP publique du modem routeur.

Le serveur du fichier de configuration peut ainsi autoriser ou interdire le téléchargement du fichier de configuration au terminal SIP complémentaire SP1 sur la base des droits de l'utilisateur de cette passerelle.

En tout état de cause, lorsque le serveur de fichier de configuration SCT permet le téléchargement du fichier de configuration, il sait avec certitude que le terminal complémentaire SP1 de voix sur IP est localisé derrière le modem routeur HWG de l'abonné.

Pour certains services de localisation, et notamment pour le routage des numéros d'urgence, la connaissance certaine de cette localisation est très importante.

Dans le cas d'un terminal SIP complémentaire SP2 accédant au réseau IMS par un modem pont, ou dans le cas d'un téléphone mobile 3G/LTE, cette vérification est réalisée implicitement. En effet, comme le terminal SP2 s'est fait allouer une adresse IP routable dans le réseau de l'opérateur, par exemple par le biais d'un serveur DHCP ou d'une session PPPoE ou PPPoA, sur la base d'identifiants physiques (ex: ligne de cuivre) et/ou mécanisme de login et password, le serveur de fichier de configuration VoIP étant uniquement accessible par les plages d'adresses IP attribuées par l'opérateur, ce dernier délivre le fichier de configuration au terminal SP2.

Dans la suite de ce document, on fera l'hypothèse que les contrôles du système d'information de l'opérateur ont été effectués et que le terminal complémentaire SIP SP1, SP2 a été localisé, autorisé à télécharger son fichier de configuration de voix sur IP et que ce fichier de configuration a été mémorisé dans sa mémoire volatile.

Cependant, il est connu que la portée du réseau WiFi est limitée (typiquement à une vingtaine de mètres) et que le terminal complémentaire SP1 peut facilement perdre la connectivité IP lorsqu'il sort de la zone de couverture WiFi.

En outre, de façon connue, l'association de binding NAT entre l'adresse IP privée du terminal SP1 et l'adresse IP publique de la passerelle domestique HGW a une durée de vie relativement courte, plus précisément préconisée à cinq minutes.

Autrement dit, si le terminal SIP complémentaire SP1 ne génère pas de trafic pendant cette durée de cinq minutes, l'association d'adresses est perdue.

Or, il se pose un problème particulier, lorsqu'un terminal complémentaire SP1 accède au réseau IMS, à travers un autre modem routeur après avoir récupérer la connectivité IP, puisqu'il continue à utiliser le même fichier de configuration précédemment mémorisé en mémoire vive et correspondant à l'ancien modem routeur.

Il se pose le même problème, lorsqu'un terminal complémentaire SP2 accède au réseau IMS, à travers un autre modem pont après avoir récupéré la connectivité IP, puisque dans ce cas, ce terminal continuerait à utiliser le même fichier de configuration précédemment mémorisé en mémoire vive et correspondant à l'abonnement de l'ancien modem pont (ex: ligne de cuivre de la résidence principale). Par exemple, si ce second modem pont est localisé dans la résidence secondaire, rien ne peut empêcher l'utilisateur de configurer dans son terminal les paramètres d'identification et d'authentification correspondant à la ligne téléphonique de la résidence secondaire, ce qui lui permettrait de se faire attribuer une adresse IP et, si le logiciel VoIP est toujours actif, de se connecter au réseau IMS. Par conséquent, si l'utilisateur appelle un numéro court d'urgence dans cette situation, c'est la localisation de la résidence principale qui sera utilisée pour traduire le numéro court d'urgence en numéro long géographique, sachant que l'information de localisation (ex: code postal ou code INSEE) est mémorisée lors de l'abonnement au service dans le serveur d'application AS.

L'invention vise un mécanisme permettant de détecter une telle situation de nomadisme du terminal SIP complémentaire SP1, SP2.

### Objet et résumé de l'invention

L'invention est définie par les revendications 1 à 9.

Plus précisément, l'invention concerne un procédé de détection d'une situation de nomadisme d'un terminal SIP dans un réseau, ce procédé comportant :
- une étape d'envoi d'une première requête SIP ;
- une étape pour obtenir une première adresse IP comprise dans une réponse à ladite première requête SIP, cette première adresse IP étant celle d'un premier point d'accès audit réseau par lequel a transité ladite première requête ;
- une étape de mémorisation de ladite première adresse IP dans une mémoire dudit terminal ;
- une étape de détection d'un retour de connectivité IP suite à la détection d'une perte de connectivité IP ;
- une étape d'envoi d'une deuxième requête SIP ;
- une étape pour obtenir une deuxième adresse IP comprise dans une réponse à ladite deuxième requête SIP, cette deuxième adresse IP étant celle d'un deuxième point d'accès audit réseau par lequel a transité ladite deuxième requête ; et
- une étape de détection d'une situation de nomadisme si les première et deuxième adresses IP sont différentes.

Corrélativement, l'invention vise aussi un terminal SIP comportant :
- des moyens d'envoi d'une première requête SIP ;
- des moyens pour obtenir une première adresse IP comprise dans une réponse à ladite première requête SIP, cette première adresse IP étant celle d'un premier point d'accès audit réseau par lequel a transité ladite première requête ;
- des moyens de mémorisation de ladite première adresse IP dans une mémoire dudit terminal ;
- des moyens de détection d'un retour de connectivité IP suite à la détection d'une perte de connectivité IP ;
- des moyens d'envoi d'une deuxième requête SIP ;
- des moyens pour obtenir une deuxième adresse IP comprise dans une réponse à ladite deuxième requête SIP, cette deuxième adresse IP étant celle d'un deuxième point d'accès audit réseau par lequel a transité ladite deuxième requête ; et
- des moyens de détection d'une situation de nomadisme si les première et deuxième adresses IP sont différentes.

Ainsi, et d'une façon générale, l'invention propose de permettre à un terminal SIP de déterminer s'il se trouve en situation de nomadisme, en comparant l'adresse IP du point d'accès via lequel il accédait au réseau IMS avant la perte de connectivité IP avec l'adresse IP du point d'accès via lequel il accède au réseau IMS après retour de la perte de connectivité IP.

Deux cas peuvent se présenter :
- lorsque le terminal SIP accède au réseau derrière un modem routeur, par exemple une passerelle domestique, le point d'accès au réseau est ce modem routeur ;
- lorsque le terminal SIP est un téléphone 3G/LTE ou qu'il accède au réseau derrière un modem pont, le point d'accès au réseau peut être considéré comme étant le terminal SIP lui-même puisqu'il obtient une adresse IP routable dans le réseau.

L'invention permet ainsi d'éviter qu'un utilisateur puisse utiliser un service SIP avec un terminal SIP complémentaire en situation de nomadisme après perte et retour de connectivité IP.

Elle permet également de contrôler qu'un terminal SIP complémentaire est effectivement localisé derrière son modem routeur nominal. Cette caractéristique est fondamentale pour permettre le bon routage des numéros d'urgence.

L'invention permet aussi de limiter l'usage d'un service lorsqu'un terminal complémentaire SIP se trouve au domicile de l'utilisateur, l'usage en situation de nomadisme pouvant faire l'objet d'une tarification particulière.

L'invention permet aussi d'éviter le piratage de points d'accès.

Selon le principe connu du routage SIP, lorsqu'un terminal SIP envoie une requête SIP (par exemple une requête REGISTER ou SUBSCRIBE), cette requête comporte un en-tête SIP « via » utilisé pour acheminer le code retour de cette requête. Chaque noeud SIP traversé ajoute son propre champ « via » de sorte que le coeur de réseau IMS puisse acheminer la réponse par le chemin inverse de celui utilisé par la requête.

L'invention propose d'exploiter cette en-tête SIP « via » pour détecter une situation de nomadisme.

Plus précisément, dans un mode particulier de réalisation, les première et deuxième requêtes SIP comportant une entête SIP « via » comportant l'adresse IP du terminal, caractérisé en ce que :
- la première adresse IP est obtenue dans une entête SIP « via » de la réponse à la première requête SIP ou dans un champ « received » de cet en-tête si celui-ci est présent ; et en ce que
- ladite deuxième adresse IP est obtenue dans une entête SIP « via » de la réponse à la deuxième requête SIP ou dans un champ « received » de cet en-tête si celui-ci est présent.

On rappelle que lorsqu'un terminal SIP est autorisé à s'enregistrer, il émet un message SIP REGISTER et insère dans ce message SIP REGISTER, l'en-tête « via » contenant l'adresse IP du terminal s'attendant à recevoir une réponse, conformément au document RFC3261.

Lorsque le premier équipement du réseau SIP reçoit le message SIP REGISTER, typiquement l'entité de bordure EB, celui-ci compare l'adresse IP contenue dans l'en-tête « via » et l'adresse IP source transportant le paquet applicatif SIP REGISTER.

Deux cas peuvent se produire :
- si les adresses IP sont identiques, cela signifie qu'il n'y a pas eu d'association NAT en amont et que le terminal SIP est un téléphone 3G/LTE ou un terminal accédant au réseau IMS derrière un modem pont. Dans ce cas, le contenu de l'en-tête « via » n'est pas modifié par cette entité de bordure et le traitement de la requête se poursuit en coeur de réseau SIP, chaque équipement traversé ajoutant sa propre en-tête SIP « via » pour permettre le routage de la réponse ;
- si les adresses IP sont différentes, cela signifie qu'une fonction de traduction d'adresses NAT a été effectuée en amont, autrement dit que le terminal SIP accède au réseau IMS derrière un modem-routeur, par exemple derrière une passerelle domestique WiFi. Dans ce cas, le contenu de l'en-tête « via » est modifié par l'entité de bordure, celle-ci ajoutant dans le paramètre « received » l'adresse IP source du paquet transportant la requête SIP.

Par conséquent, lorsque le terminal SIP reçoit une réponse à sa première ou à sa deuxième requête SIP, il est en mesure de déterminer s'il est connecté derrière un modem routeur (présence du paramètre « received ») ou non (absence du paramètre « received »).

Ce mode de réalisation de l'invention est particulièrement avantageux car il permet la détection de l'adresse du point d'accès au réseau IMS en se basant uniquement sur le protocole applicatif SIP. En variante, on pourrait utiliser le protocole STUN ou le protocole UPnP IGD pour obtenir l'adresse IP du point d'accès, chacune de ces solutions nécessitant un développement spécifique au niveau du terminal, et :
- soit un développement spécifique au niveau de la passerelle domestique pour la solution UPnP IGD ; ou
- soit la mise en place d'un serveur STUN dans le réseau.

Dans un mode particulier de réalisation de l'invention, le procédé de détection selon l'invention comporte une étape de désenregistrement dudit terminal du réseau IMS en cas de détection de situation de nomadisme.

Cette caractéristique permet avantageusement d'interdire tout accès au réseau IMS après retour de connectivité IP lorsqu'un terminal SIP a changé de point d'accès.

Dans un mode particulier de réalisation de l'invention, le procédé de détection selon l'invention comporte une étape de dé-souscription aux services SIP auxquels avait souscrit le terminal avant la perte de connectivité IP, cette dé-souscription, lorsqu'elle a lieu, devant être effectuée avant le désenregistrement du coeur de réseau IMS.

Cette étape de dé-souscription aux services SIP permet de libérer les ressources utilisées au sein des différentes entités du réseau IMS pour mémoriser les contextes de dialogues SIP.

Dans un mode particulier de réalisation de l'invention, lorsque le terminal a souscrit à au moins un service avant la perte de connectivité IP, et lorsque la situation de nomadisme n'est pas détectée (première et deuxième adresses IP identiques), le procédé selon l'invention comporte :
- une étape pour déterminer si le terminal est toujours enregistré en coeur de réseau IMS après le retour de connectivité IP ; et si c'est le cas
- une étape de souscription subséquent audit au moins un service.

On rappelle que la souscription subséquente à un service SIP concerne les requêtes de souscription envoyées après la requête de souscription initiale du terminal pour renouveler la souscription au service avant expiration de la durée Expires.

Dans un mode particulier de réalisation de l'invention, lorsque la situation de nomadisme n'est pas détectée après le retour de connectivité IP (première et deuxième adresses IP identiques), le procédé comporte :
- une étape pour déterminer si le terminal est toujours enregistré en coeur de réseau IMS après le retour de connectivité IP ; et si ce n'est pas le cas
- une étape de réenregistrement en coeur de réseau IMS en utilisant le fichier de configuration utilisé pour l'enregistrement précédent en coeur de réseau IMS, avant la perte de connectivité IP, ce fichier étant mémorisé dans une mémoire volatile du terminal.

Ainsi, et de façon très avantageuse, l'invention permet de réutiliser le fichier de configuration et d'éviter de réinterroger le serveur de fichier de configuration.

Dans un mode particulier de réalisation, les différentes étapes du procédé de détection de situation de nomadisme sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre des étapes du procédé de détection de situation de nomadisme tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous en référence aux dessins qui en illustrent un exemple de réalisation dépourvu de tout caractère limitatif. Sur les figures :
- la figure 1, déjà décrite, représente deux terminaux SIP conformes à un mode particulier de réalisation de l'invention dans leurs environnements ;
- la figure 2 représente de façon schématique l'architecture matérielle d'un terminal SIP conforme à un mode particulier de réalisation de l'invention ; et
- la figure 3 représente sous forme d'organigramme les principales étapes d'un procédé de détection de situation de nomadisme conforme à un mode particulier de réalisation de l'invention.

### Description détaillée de l'invention

En référence à la **figure 2****,** on a représenté l'architecture matérielle d'un terminal SIP SP1, SP2 conforme à un mode de réalisation de l'invention.

Dans le mode de réalisation décrit ici, ce terminal SP1, SP2 a l'architecture matérielle d'un ordinateur. Il comporte notamment un processeur 11, une mémoire vive de type RAM 12, une mémoire morte de type ROM 13, des moyens de communication 14 et une mémoire non volatile réinscriptible 15.

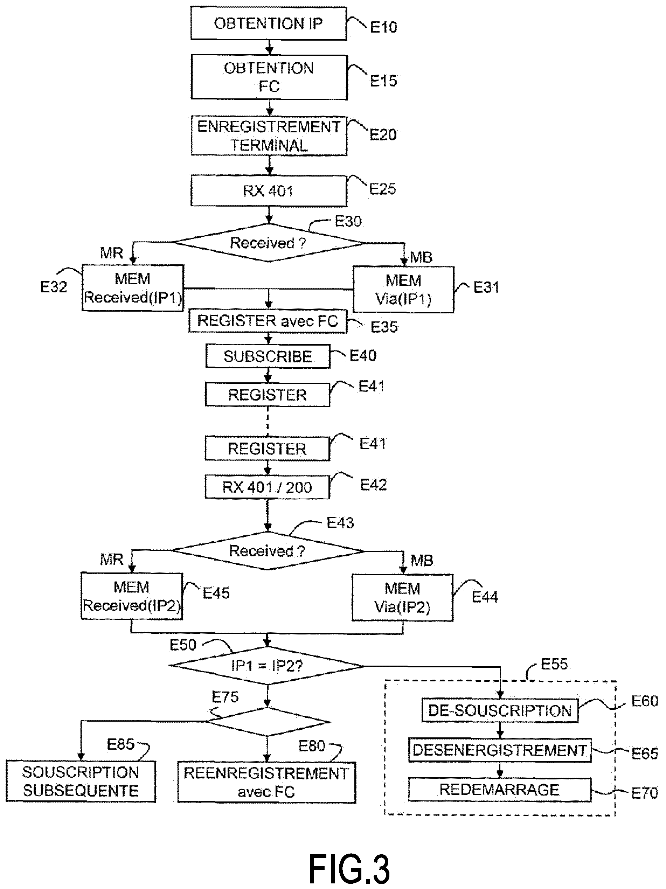

La mémoire morte de type ROM 13 constitue un support d'enregistrement conforme à l'invention. Ce support d'enregistrement est lisible par le processeur 11 et il mémorise un programme d'ordinateur PG comprenant des instructions pour mettre en oeuvre un procédé de détection de situation de nomadisme dont les principales étapes sont représentées sous forme d'organigramme à la figure 3.

On notera que l'architecture matérielle et l'architecture logicielle des terminaux SIP SP1 et SP2 accédant respectivement au réseau IMS via un modem routeur ou via un modem pont sont strictement identiques en ce que concerne l'invention.

On va maintenant décrire, en référence à la **figure 3** les principales étapes E10 à E85 du procédé mis en oeuvre par ces terminaux.

On suppose tout d'abord que la passerelle HGW de type modem routeur a obtenu son fichier de configuration VoIP auprès du serveur de configuration SCMR et éventuellement qu'elle a souscrit à un certain nombre de services SIP.

Au cours d'une étape E10, le terminal SIP SP1, SP2 obtient une adresse IP. Dans le cas du terminal SP1 connecté derrière le modem routeur HGW cette opération s'effectue auprès d'un serveur DHCP embarqué dans la passerelle. Dans le cas du terminal SP2, l'obtention de l'adresse IP peut s'effectuer auprès d'un serveur DHCP du réseau IP.

Au cours d'une étape E15, les terminaux SP1, SP2 obtiennent un fichier de configuration VoIP par l'envoi par exemple d'une requête GET HTTP adressée au serveur de configuration terminal SCT dont l'adresse est mémorisée dans la mémoire non volatile 15.

Une fois ce fichier de configuration mémorisé dans la mémoire volatile 14, au cours d'une étape E20, le terminal SP1, SP2 envoie une requête d'enregistrement SIP REGISTER à destination de l'entité de bordure EB qui la route vers le serveur S-CSCF du réseau IMS, en utilisant les paramètres du fichier de configuration VoIP obtenu en étape E15. Cette requête SIP constitue une première requête au sens de l'invention.

Au cours d'une étape E25, le terminal SP1, SP2 reçoit une réponse de type 401 Nonce. Cette réponse constitue une première réponse au sens de l'invention.

Conformément à l'invention, le terminal SP1, SP2 mémorise l'adresse IP (référencée IP1) du point d'accès par lequel la première requête envoyée à l'étape E20 a transité. Dans le cas du terminal SP1, ce point d'accès est la passerelle domestique HGW. Dans le cas du terminal SP2, ce point d'accès est le terminal SP2 lui-même.

Dans l'exemple de réalisation décrit ici, le terminal SP1, SP2 vérifie au cours d'une étape E30, si l'en-tête « via » de la première réponse SIP 401 Nonce reçue à l'étape E25 comporte on non un champ « received ».

Si tel est le cas, le résultat du test E30 est positif. Cela signifie que le terminal SP1 accédait au réseau via un modem routeur, en l'occurrence via la passerelle HGW, au moment de l'envoi de la première requête REGISTER.

Dans le cas contraire, le résultat du test E30 est négatif. Cela signifie que le terminal SP2 accède au réseau IMS directement ou derrière un modem pont MB.

Quoiqu'il en soit, l'adresse IP1 du point d'accès (HGW, respectivement SP2) est mémorisée dans la mémoire volatile 14 du terminal (SP1, respectivement SP2).

Au cours d'une étape E35, le terminal SP1, SP2 peut s'enregistrer en coeur de réseau IMS en utilisant les informations contenues dans le fichier de configuration reçu à l'étape E15 et le matériel d'authentification Nonce reçu à l'étape E25.

On suppose ensuite que le terminal SP1, SP2 souscrit, au cours d'une étape E40, à un ou plusieurs services SIP.

Puis, on suppose que le terminal SP1, SP2 détecte une perte de connectivité IP au cours d'une étape E41. En pratique une perte de connectivité IP peut être déterminée lorsque le terminal SP1, SP2 ne reçoit pas de réponse à l'envoi successif de requêtes SIP selon le protocole défini dans le document RFC3261 (envoi de n requêtes successives pendant 32s, puis attente d'une durée puis nouvelle tentative).

On suppose qu'après un certain nombre de requêtes REGISTER restées sans réponse, le terminal SP1, SP2 détecte un retour de connectivité IP, par réception, à l'étape E42, d'une réponse à la dernière requête REGISTER émise.

Cette dernière requête REGISTER et sa réponse constituent respectivement une deuxième requête et une deuxième réponse au sens de l'invention.

Au cours d'un test E43, similaire au test E30, le terminal SP1, SP2 vérifie si la deuxième réponse reçue à l'étape E42 comporte un champ « received » dans l'en-tête « via» .

Si c'est le cas, le résultat du test E43 est positif. Cela signifie que le terminal SP1 accédait au réseau via un modem routeur, en l'occurrence via la passerelle HGW, au moment de l'envoi de la dernière requête REGISTER.

Dans le cas contraire, le résultat du test E43 est négatif. Cela signifie que le terminal SP2 accédait au réseau IMS directement ou derrière un modem pont MB au moment de l'envoi de la dernière requête REGISTER.

Quoiqu'il en soit, le terminal SP1, SP2 obtient l'adresse IP2 contenue dans l'en-tête « via » (étape E44) ou dans le champ « received » de cet en-tête (étape E45) de la réponse SIP reçue à l'étape E42.

Au cours d'une étape E50, le terminal SP1, SP2 compare les première et deuxième adresses IP1, IP2. Si ces adresses sont différentes, le résultat du test E50 est négatif. Cela signifie qu'une situation de nomadisme est détectée (étape E55).

Si les adresses IP1 et IP2 sont identiques, la situation de nomadisme n'est pas détectée. On notera que l'invention ne permet pas de détecter la situation de nomadisme dans laquelle le terminal SP2 accède au réseau IMS via des modems ponts différents avant perte de connectivité et après retour de connectivité.

Dans l'exemple de réalisation décrit ici, lorsque la situation de nomadisme est détectée (étape E55), le terminal SP1, SP2 de-souscrit en étape E60 aux services SIP souscrits (étape E40) avant la perte de connectivité IP, ce qui permet de libérer les contextes de dialogues SIP dans les différentes entités du réseau IMS.

Puis, si la réponse en étape E42 était 200 OK, il se dés-enregistre du coeur de réseau IMS au cours d'une étape E65.

Le terminal SIP SP1, SP2 peut ensuite redémarrer (étape E70) pour obtenir un nouveau fichier de configuration en interrogeant le serveur SCT et le mémoriser dans sa mémoire volatile 14.

Dans l'exemple de réalisation décrit ici, lorsqu'une situation de nomadisme n'est pas détectée (résultat du test E50 positif), le terminal SP1, SP2 vérifie (étape E75) sur la base de la réponse reçue en étape E42 s'il est toujours enregistré en coeur de réseau IMS.

Si ce n'est pas le cas, le terminal SP1, SP2 se réenregistre en coeur de réseau IMS en utilisant le fichier de configuration FC reçu (étape E15) avant la perte de connectivité IP et avec le Nonce reçu à l'étape E42.

Si le terminal SP1, SP2 est toujours enregistré en coeur de réseau IMS, l'interruption de perte de connectivité IP ayant été de courte durée, ce terminal maintient sa souscription aux services souscrits avant la perte de connectivité IP par l'envoi de requêtes de souscription subséquentes (étape E85).

## Revendications

1. Procédé de détection d'une situation de nomadisme d'un terminal SIP (SP1, SP2) dans un réseau comportant :
- une étape (E20) d'envoi d'une première requête SIP ;
- une étape (E31, E32) pour obtenir une première adresse IP (IP1) comprise dans une réponse à ladite première requête SIP, cette première adresse IP étant celle d'un premier point d'accès (HGW, SP2) audit réseau par lequel a transité ladite première requête ;
- une étape (E31, E32) de mémorisation de ladite première adresse IP dans une mémoire dudit terminal ;
- une étape (E41) d'envoi d'une deuxième requête SIP ;
- une étape de détection (E41) d'une perte de connectivite IP lorsque le terminal SIP ne reçoit pas de réponse à l'envoi de la deuxième requête SIP ;
- une étape (E42) de détection d'un retour de connectivité IP par réception d'une réponse à la deuxième requête SIP émise,
- une étape de vérification (E43) par le terminal SIP (SP1, SP2) si ladite réponse reçue à l'étape précédente (E42) comporte un champ « received » dans une entête « via » ;
- une étape (E44, E45) pour obtenir une deuxième adresse IP (IP2) contenue dans ladite entête « via » (E44) ou dans ledit champ « received » de cette entête (E45) comprise dans une réponse à ladite deuxième requête SIP, cette deuxième adresse IP étant celle d'un deuxième point d'accès (HGW, SP2) audit réseau par lequel a transité ladite deuxième requête ; et
- une étape (E55) de détection d'une situation de nomadisme si les première et deuxième adresses IP sont différentes.

2. Procédé de détection d'une situation de nomadisme selon la revendication 1, dans lequel les première et deuxième requêtes SIP comportent une entête SIP « via » comportant l'adresse IP dudit terminal, **caractérisé en ce que** :
- ladite première adresse IP est obtenue dans une entête SIP « via » de la réponse à ladite première requête SIP ou dans un champ received de cet entête si celui-ci est présent ; et **en ce que**
- ladite deuxième adresse IP est obtenue dans une entête SIP « via » de la réponse à ladite deuxième requête SIP ou dans un champ received de cet entête si celui-ci est présent.

3. Procédé de détection d'une situation de nomadisme selon la revendication 1 ou 2, **caractérisé en ce qu'**il comporte une étape de désenregistrement dudit terminal du réseau IMS en cas de détection de situation de nomadisme.

4. Procédé de détection d'une situation de nomadisme selon l'une quelconque des revendications 1 à 3, **caractérisé en ce qu'**il comporte une étape de dé-souscription aux services SIP auxquels ledit terminal avait souscrit avant la perte de connectivité IP.

5. Procédé de détection d'une situation de nomadisme selon l'une quelconque des revendications 1 à 4, dans lequel ledit terminal a souscrit à au moins un service avant ladite perte de connectivité IP, **caractérisé en ce qu'**il comporte, lorsque lesdites première et deuxième adresses IP sont identiques :
- une étape pour déterminer si ledit terminal est toujours enregistré en coeur de réseau IMS après ledit retour de connectivité IP ; et si c'est le cas
- une étape de souscription subséquent audit au moins un service.

6. Procédé de détection d'une situation de nomadisme selon l'une quelconque des revendications 1 à 5, **caractérisé en ce qu'**il comporte, lorsque lesdites première et deuxième adresses IP sont identiques :
- une étape pour déterminer si ledit terminal est toujours enregistré en coeur de réseau IMS après ledit retour de connectivité IP ; et si ce n'est pas le cas
- une étape de réenregistrement en coeur de réseau IMS en utilisant le fichier de configuration utilisé pour l'enregistrement précédent en coeur de réseau IMS, avant la perte de connectivité IP, ce fichier étant mémorisé dans une mémoire volatile dudit terminal.

7. Terminal SIP (SP1, SP2) comportant :
- des moyens d'envoi d'une première requête SIP ;
- des moyens pour obtenir une première adresse IP (IP1) comprise dans une réponse à ladite première requête SIP, cette première adresse IP étant celle d'un premier point d'accès audit réseau par lequel a transité ladite première requête ;
- des moyens de mémorisation de ladite première adresse IP dans une mémoire dudit terminal ;
- des moyens d'envoi d'une deuxième requête SIP ;
- des moyens de détection d'une perte de connectivite IP lorsque le terminal SIP ne reçoit pas de réponse à l'envoi de la deuxième requête SIP ;
- des moyens de détection d'un retour de connectivité IP par réception d'une réponse à la deuxième requête SIP émise,
- des moyens de vérification (E43) par le terminal SIP (SP1, SP2) si ladite réponse reçue à l'étape précédente (E42) comporte un champ « received » dans une entête « via » ;
- des moyens pour obtenir une deuxième adresse IP (IP2) contenue dans ladite entête « via » (E44) ou dans ledit champ « received » de cette entête comprise dans une réponse à ladite deuxième requête SIP, cette deuxième adresse IP étant celle d'un deuxième point d'accès audit réseau par lequel a transité ladite deuxième requête ; et
- des moyens de détection d'une situation de nomadisme si les première et deuxième adresses IP sont différentes.

8. Programme d'ordinateur (PG) comportant des instructions pour l'exécution des étapes du procédé de détection d'une situation de nomadisme selon l'une quelconque des revendications 1 à 6 lorsque ledit programme est exécuté par un ordinateur.

9. Support d'enregistrement (13) lisible par un ordinateur sur lequel est enregistré un programme d'ordinateur (PG) comprenant des instructions pour l'exécution des étapes du procédé de détection de situation de nomadisme selon l'une quelconque des revendications 1 à 6.

## Patentansprüche

1. Verfahren zur Erfassung einer Situation der nomadischen Nutzung eines SIP-Endgeräts (SP1, SP2) in einem Netz, das aufweist:
- einen Schritt (E20) des Sendens einer ersten SIP-Anforderung;
- einen Schritt (E31, E32), um eine erste IP-Adresse (IP1) zu erhalten, die in einer Antwort auf die erste SIP-Anforderung enthalten ist, wobei diese erste IP-Adresse diejenige eines ersten Zugangspunkts (HGW, SP2) zum Netz ist, über den die erste Anforderung gelaufen ist;
- einen Schritt (E31, E32) des Speicherns der ersten IP-Adresse in einem Speicher des Endgeräts;
- einen Schritt (E41) des Sendens einer zweiten SIP-Anforderung;
- einen Schritt der Erfassung (E41) eines IP-Konnektivitätsverlusts, wenn das SIP-Endgerät keine Antwort auf das Senden der zweiten SIP-Anforderung empfängt;
- einen Schritt (E42) der Erfassung einer IP-Konnektivitätsrückkehr durch Empfang einer Antwort auf die zweite gesendete SIP-Anforderung,
- einen Schritt der Überprüfung (E43) durch das SIP-Endgerät (SP1, SP2), ob die im vorhergehenden Schritt (E42) empfangene Antwort ein Feld «received» in einer Kopfzeile «via» aufweist;
- einen Schritt (E44, E45), um eine zweite IP-Adresse (IP2) zu erhalten, die in der Kopfzeile «via» (E44) oder im Feld «received» dieser Kopfzeile (E45) enthalten ist, die in einer Antwort auf die zweite SIP-Anforderung enthalten ist, wobei diese zweite IP-Adresse diejenige eines zweiten Zugangspunkts (HGW, SP2) zum Netz ist, über den die zweite Anforderung gelaufen ist; und
- einen Schritt (E55) der Erfassung einer Situation der nomadischen Nutzung, wenn die erste und die zweite IP-Adresse unterschiedlich sind.

2. Verfahren zur Erfassung einer Situation der nomadischen Nutzung nach Anspruch 1, wobei die erste und die zweite SIP-Anforderung eine SIP-Kopfzeile «via» aufweisen, die die IP-Adresse des Endgeräts aufweist, **dadurch gekennzeichnet, dass**:
- die erste IP-Adresse in einer SIP-Kopfzeile «via» der Antwort auf die erste SIP-Anforderung oder in einem Feld «received» dieser Kopfzeile erhalten wird, wenn dieses vorhanden ist; und dass
- die zweite IP-Adresse in einer SIP-Kopfzeile «via» der Antwort auf die zweite SIP-Anforderung oder in einem Feld «received» dieser Kopfzeile erhalten wird, wenn dieses vorhanden ist.

3. Verfahren zur Erfassung einer Situation der nomadischen Nutzung nach Anspruch 1 oder 2, **dadurch gekennzeichnet, dass** es einen Schritt der Löschung der Registrierung des Endgeräts im IMS-Netz im Fall der Erfassung einer Situation der nomadischen Nutzung aufweist.

4. Verfahren zur Erfassung einer Situation der nomadischen Nutzung nach einem der Ansprüche 1 bis 3, **dadurch gekennzeichnet, dass** es einen Schritt des Abmeldens von den SIP-Diensten aufweist, bei denen das Endgerät sich vor dem IP-Konnektivitätsverlust angemeldet hatte.

5. Verfahren zur Erfassung einer Situation der nomadischen Nutzung nach einem der Ansprüche 1 bis 4, wobei das Endgerät sich vor dem IP-Konnektivitätsverlust bei mindestens einen Dienst angemeldet hat, **dadurch gekennzeichnet, dass** es, wenn die erste und die zweite IP-Adresse gleich sind, aufweist:
- einen Schritt, um zu bestimmen, ob das Endgerät nach der IP-Konnektivitätsrückkehr immer noch im IMS-Kern registriert ist; und wenn dies der Fall ist
- einen nachfolgenden Schritt der Anmeldung bei dem mindestens einen Dienst.

6. Verfahren zur Erfassung einer Situation der nomadischen Nutzung nach einem der Ansprüche 1 bis 5, **dadurch gekennzeichnet, dass** es, wenn die erste und die zweite IP-Adresse gleich sind, aufweist:
- einen Schritt, um zu bestimmen, ob das Endgerät nach der IP-Konnektivitätsrückkehr immer noch im IMS-Kern registriert ist; und wenn dies nicht der Fall ist
- einen Schritt der erneuten Registrierung im IMS-Kern unter Verwendung der Konfigurationsdatei, die für die vorhergehende Registrierung im IMS-Kern vor dem IP-Konnektivitätsverlust verwendet wurde, wobei diese Datei in einem flüchtigen Speicher des Endgeräts gespeichert wird.

7. SIP-Endgerät (SP1, SP2), das aufweist:
- Einrichtungen zum Senden einer ersten SIP-Anforderung;
- Einrichtungen zum Erhalt einer ersten IP-Adresse (IP1), die in einer Antwort auf die erste SIP-Anforderung enthalten ist, wobei diese erste IP-Adresse diejenige eines ersten Zugangspunkts zum Netz ist, über den die erste Anforderung gelaufen ist;
- Einrichtungen zum Speichern der ersten IP-Adresse in einem Speicher des Endgeräts;
- Einrichtungen zum Senden einer zweiten SIP-Anforderung;
- Einrichtungen zur Erfassung eines IP-Konnektivitätsverlusts, wenn das SIP-Endgerät keine Antwort auf das Senden der zweiten SIP-Anforderung empfängt;
- Einrichtungen zur Erfassung einer IP-Konnektivitätsrückkehr durch Empfang einer Antwort auf die zweite gesendete SIP-Anforderung,
- Einrichtungen zur Überprüfung (E43) durch das SIP-Endgerät (SP1, SP2), ob die im vorhergehenden Schritt (E42) empfangene Antwort ein Feld «received» in einer Kopfzeile «via» aufweist;
- Einrichtungen zum Erhalt einer zweiten IP-Adresse (IP2), die in der Kopfzeile «via» (E44) oder im Feld «received» dieser Kopfzeile enthalten ist, die in einer Antwort auf die zweite SIP-Anforderung enthalten ist, wobei diese zweite IP-Adresse diejenige eines zweiten Zugangspunkts zum Netz ist, über den die zweite Anforderung gelaufen ist; und
- Einrichtungen zur Erfassung einer Situation der nomadischen Nutzung, wenn die erste und die zweite IP-Adressen unterschiedlich sind.

8. Computerprogramm (PG), das Anweisungen zur Ausführung der Schritte des Verfahrens zur Erfassung einer Situation der nomadischen Nutzung nach einem der Ansprüche 1 bis 6 aufweist, wenn das Programm von einem Computer ausgeführt wird.

9. Computerlesbarer Aufzeichnungsträger (13), auf dem ein Computerprogramm (PG) aufgezeichnet ist, das Anweisungen zur Ausführung der Schritte des Verfahrens zur Erfassung einer Situation der nomadischen Nutzung nach einem der Ansprüche 1 bis 6 enthält.

## Claims

1. Method for detecting a situation of roaming of an SIP terminal (SP1, SP2) in a network comprising:
- a step (E20) of dispatching a first SIP request;
- a step (E31, E32) of obtaining a first IP address (IP1) included in a response to said first SIP request, this first IP address being that of a first point of access (HGW, SP2) to said network through which said first request has travelled;
- a step (E31, E32) of storing said first IP address in a memory of said terminal;
- a step (E41) of dispatching a second SIP request;
- a step (E41) of detecting a loss of IP connectivity when the SIP terminal does not receive a response to the dispatching of the second SIP request;
- a step (E42) of detecting a return of IP connectivity by receiving a response to the second SIP request emitted;
- a step (E43) of verifying by the SIP terminal (SP1, SP2) whether said response received in the previous step (E42) comprises a "received" field in a "via" header;
- a step (E44, E45) for obtaining a second IP address (IP2) contained in said "via" header (E44) or in said "received" field of this header (E45) included in a response to said second SIP request, this second IP address being that of a second point of access (HGW, SP2) to said network through which said second request has travelled; and
- a step (E55) of detecting a roaming situation if the first and second IP addresses are different.

2. Method for detecting a roaming situation according to Claim 1, in which the first and second SIP requests comprise an SIP header "via" comprising the IP address of said terminal, **characterized in that**:
- said first IP address is obtained in an SIP header "via" of the response to said first SIP request or in a received field of this header if said field is present; and **in that**
- said second IP address is obtained in an SIP header "via" of the response to said second SIP request or in a received field of this header if said field is present.

3. Method for detecting a roaming situation according to Claim 1 or 2, **characterized in that** it comprises a step of deregistering said terminal from the IMS network if a roaming situation is detected.

4. Method for detecting a roaming situation according to any one of Claims 1 to 3, **characterized in that** it comprises a step of desubscription to the SIP services to which said terminal had subscribed before the loss of IP connectivity.

5. Method for detecting a roaming situation according to any one of Claims 1 to 4, in which said terminal has subscribed to at least one service before said loss of IP connectivity, **characterized in that** it comprises, when said first and second IP addresses are identical:
- a step for determining whether said terminal is still registered in the IMS network core after said return of IP connectivity; and if such is the case
- a step of subsequent subscription to said at least one service.

6. Method for detecting a roaming situation according to any one of Claims 1 to 5, **characterized in that** it comprises, when said first and second IP addresses are identical:
- a step for determining whether said terminal is still registered in the IMS network core after said return of IP connectivity; and if such is not the case
- a step of reregistering in the IMS network core by using the configuration file used for the previous registration in IMS network core, before the loss of IP connectivity, this file being stored in a volatile memory of said terminal.

7. SIP terminal (SP1, SP2) comprising:
- means for dispatching a first SIP request;
- means for obtaining a first IP address (IP1) included in a response to said first SIP request, this first IP address being that of a first point of access to said network through which said first request has travelled;
- means for storing said first IP address in a memory of said terminal;
- means for dispatching a second SIP request;
- means for detecting a loss of IP connectivity when the SIP terminal does not receive a response to the dispatching of the second SIP request;
- means for detecting a return of IP connectivity by receiving a response to the second SIP request emitted;
- means for verifying (E43) by the SIP terminal (SP1, SP2) whether said response received in the previous step (E42) comprises a "received" field in a "via" header;
- means for obtaining a second IP address (IP2) contained in said "via" header or in said "received" field of this header included in a response to said second SIP request, this second IP address being that of a second point of access to said network through which said second request has travelled; and
- means for detecting a roaming situation if the first and second IP addresses are different.

8. Computer program (PG) comprising instructions for the execution of the steps of the method for detecting a roaming situation according to any one of Claims 1 to 6 when said program is executed by a computer.

9. Recording medium (13) readable by a computer on which is recorded a computer program (PG) comprising instructions for the execution of the steps of the roaming situation detection method according to any one of Claims 1 to 6.
